# EUROPEAN PATENT APPLICATION

(11) **EP 1 388 357 A2**
(43) Date of publication of application: **11.02.2004**
(21) Application number: 03254168.2
(22) Date of filing: 30.06.2003
(51) Int. Cl.: A63F 13/10

(54) **Group behavioural modification using external stimuli**

(30) Priority: 07.08.2002 US 401940 P; 11.02.2003 US 364951
(71) Applicant: Sony Computer Entertainment America Inc., Foster City, CA 94404-2175 (US)
(72) Inventor: ANNUNZIATA, Ed, Foster City CA 94404-2175 (US)
(74) Representative: Turner, James Arthur

(57) **Abstract**

Character behavior in a video game is driven by a character's attributes. The character's attributes are classified as static attributes, dynamic attributes, meta attributes, and emotional attributes. A user issues external stimuli, such as voice commands, to a group of characters. One or more attributes associated with each character are adjusted based upon the external stimuli. Thus, the user may issue external stimuli to affect the behavior and actions of a group of characters.

## Description

This invention relates generally to electronic entertainment systems and more particularly to a system and method for modifying group behavior via external stimuli.

In electronic systems, particularly entertainment and gaming systems, a user typically controls the behavior or actions of at least one character in a game program using some type of manually activated controller device. Conventional controller devices include joysticks, switches, buttons, and keyboards. Further, some gaming systems use specifically designed control devices, such as a steering wheel and pedals for driving simulations, or a stick and pedals for flight simulations. Yet more advanced gaming systems may use voice controls or human movements in a virtual reality game.

In gaming systems using manually activated controller devices, a controller device, typically, utilizes buttons and keystrokes assigned with different meanings according to the requirements of the particular game. As an example, a game may have a particular button corresponding to a punch, while in another game the same button may correspond to firing a gun. In many games, a user can only control the actions of a single character. Although games may allow the user to control a group of characters, the characters typically act as a unit, so the group of characters effectively acts as a single character. Virtually all conventional games allow for manual user control of at least one character.

As game players become more sophisticated, the players are demanding more advanced forms of gaming. Early forms of electronic games consisted of simple blocks and moving targets (e.g., Breakout, Space Invaders, Centipede). Over time, the games became graphically more detailed and intricate. More recently, virtual reality games have become popular. Virtual reality games allow for the player to immerse themselves into the gaming environment and interact with various elements of the environment. However, all of these types of games require a large amount of manual control over character actions during the game play.

Furthermore, conventional games do not normally create any form of attachment or emotion between game characters and a human player. The game character is considered just an element of the game used for entertainment value. This lack of attachment or caring for the character is partly due to the perception that the character is not "alive." However, if the character projects life-like features and human characteristics, such as having feelings, the player is more likely to form an emotional attachment to the character.

In addition, users of conventional games do not typically utilize game character emotions as strategic game elements that may train or affect groups of characters via game play interactions. Emotions add a level of complexity and unpredictability to character behavior, and further add to a user's arsenal of strategic weapons to enhance game play enjoyment.

Therefore, there is a need for a system and method for dynamic behavioral modification of a group of characters via user participation.

Various respective aspects and features of the invention are defined in the appended claims. Features from the dependent claims may be combined with features of the independent claims as appropriate and not merely as explicitly set out in the claims.

A system and method for behavioral modification of a group of characters via external stimuli is disclosed. According to the present invention, character behavior in a video game is driven by a character's attributes. The character's attributes are classified as static attributes, dynamic attributes, and meta attributes. A subset of the dynamic attributes include the character's emotional attributes expressed as numerical hate/ love (H/L) values stored in H/L tables. In one embodiment of the present invention, a user issues an external stimulus directed towards a group of characters associated with the user. Preferably, the external stimulus is a voice command. The video game module processes the external stimulus and adjusts one or more attributes of each character based upon the external stimulus. Then, each character of the group of characters responds to the external stimulus based on each character's adjusted attributes.

In one embodiment of the invention, an electronic entertainment system includes a microphone for receiving voice commands and converting the received voice commands to electrical signals, a processor coupled to the microphone, and a memory coupled to the processor and configured to store a game module. The game module includes a data storage for storing each character's attributes, voice recognition software executable by the processor for processing the electrical signals, and a data table adjuster executable by the processor for adjusting each character's attributes based upon the processed electrical signals. In addition, the game module further includes an action generator executable by the processor for processing each character's adjusted and non-adjusted attributes to respond to the voice commands.

For example, a user issues a "run away" command to a group of characters. The video game processes the "run away" command, and adjusts each character's fight/flight attribute based upon the processed voice command and a predefined "flee" adjustment. In other words, the user issues a voice command to instantaneously and temporarily adjust each character's fight/flight attribute, causing each character of the group of characters to run away from enemy characters. In effect, the group is running across the terrain at some average group speed, although each character runs at a speed identified by the character's speed attribute.

The invention will now be described by way of example with reference to the accompanying drawings, throughout which like parts are referred to by like references, and in which:
FIG. 1 is a block diagram of an exemplary electronic entertainment system, according to the present invention;
FIG. 2 is a block diagram of one embodiment of the main memory of FIG. 1, according to the present invention;
FIG. 3A is a block diagram of an exemplary embodiment of data storage of FIG. 2;
FIG. 3B is a block diagram of an exemplary embodiment of the character A data storage module of FIG 3A;
FIG. 4 is a block diagram of an exemplary embodiment of the static parameter table of FIG. 3B;
FIG. 5 is a block diagram of an exemplary embodiment of the dynamic parameter table of FIG. 3B;
FIG. 6 is a block diagram of an exemplary embodiment of the meta parameter table of FIG. 3B;
FIG. 7 is a block diagram of an exemplary embodiment of the emotion tables of FIG. 3B; and
FIG. 8 is a flowchart of method steps for group behavioral modification using external stimuli, according to one embodiment of the present invention.

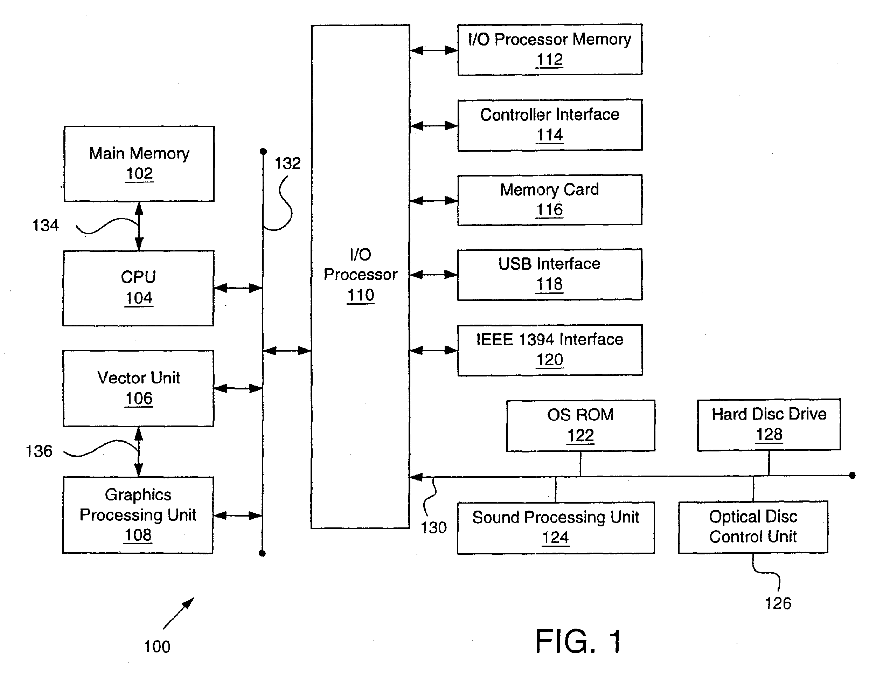

FIG. 1 is a block diagram of an exemplary electronic entertainment system 100 according to the present invention. The entertainment system 100 includes a main memory 102, a central processing unit (CPU) 104, at least one vector unit 106, a graphics processing unit 108, an input/ output (I/O) processor 110, an I/O processor memory 112, a controller interface 114, a memory card 116, a Universal Serial Bus (USB) interface 118, and an IEEE 1394 interface 120, although other bus standards and interfaces may be utilized. The entertainment system 100 further includes an operating system read-only memory (OS ROM) 122, a sound processing unit 124, an optical disc control unit 126, and a hard disc drive 128, which are connected via a bus 130 to the I/O processor 110. Preferably, the entertainment system 100 is an electronic gaming console. Alternatively, the entertainment system 100 may be implemented as a general-purpose computer, a set-top box, or a hand-held gaming device. Further, similar entertainment systems may contain more or less operating components.

The CPU 104, the vector unit 106, the graphics processing unit 108, and the I/O processor 110 communicate via a system bus 132. Further, the CPU 104 communicates with the main memory 102 via a dedicated bus 134, while the vector unit 106 and the graphics processing unit 108 may communicate through a dedicated bus 136. The CPU 104 executes programs stored in the OS ROM 122 and the main memory 102. The main memory 102 may contain prestored programs and programs transferred through the I/O processor 110 from a CD-ROM, DVD-ROM, or other optical disc (not shown) using the optical disc control unit 126. The I/O processor 110 primarily controls data exchanges between the various devices of the entertainment system 100 including the CPU 104, the vector unit 106, the graphics processing unit 108, and the controller interface 114.

The graphics processing unit 108 executes graphics instructions received from the CPU 104 and the vector unit 106 to produce images for display on a display device (not shown). For example, the vector unit 106 may transform objects from three-dimensional coordinates to two-dimensional coordinates, and send the two-dimensional coordinates to the graphics processing unit 108. Furthermore, the sound processing unit 124 executes instructions to produce sound signals that are outputted to an audio device such as speakers (not shown).

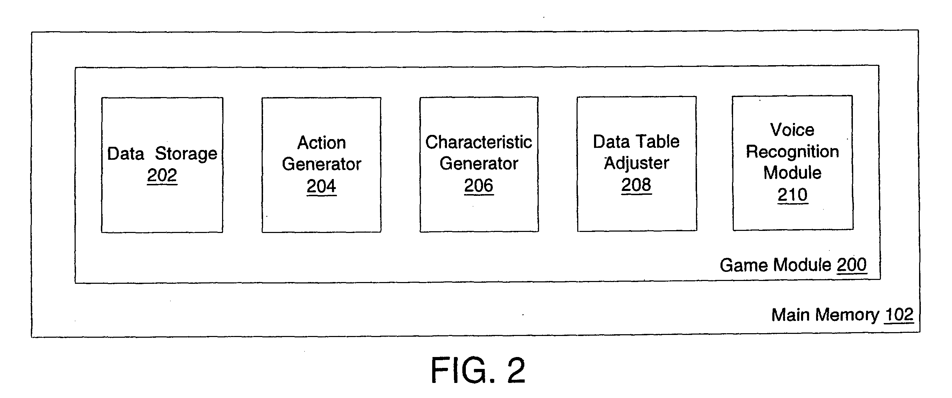

A user of the entertainment system 100 provides instructions via the controller interface 114 to the CPU 104. For example, the user may instruct the CPU 104 to store certain game information on the memory card 116 or instruct a character in a game to perform some specified action. The controller interface 114 may include a transducer (not shown) to convert acoustic signals to electrical signals. In other embodiments, the transducer may be a separate element of the electronic entertainment system 100. As discussed below in conjunction with FIG. 2, voice recognition software stored in the main memory 102 is executable by the CPU 104 to process the electrical signals. Further, other devices may be connected to the entertainment system 100 via the USB interface 118 and the IEEE 1394 interface 120.

FIG. 2 is a block diagram of one embodiment of the main memory 102 of FIG. 1 according to the present invention. The main memory 102 is shown containing a game module 200 which is loaded into the main memory 102 from an optical disc in the optical disc control unit 126 (FIG. 1). The game module 200 contains instructions executable by the CPU 104, the vector unit 106, and the sound processing unit 124 of FIG. 1 that allows a user of the entertainment system 100 (FIG. 1) to play a game. In the exemplary embodiment of FIG. 2, the game module 200 includes data storage 202, an action generator 204, a characteristic generator 206, a data table adjuster 208, and a voice recognition module 210.

In one embodiment, the action generator 204, the characteristic generator 206, and the data table adjuster 208 may be modules executable by the CPU 104. For example, the action generator 204 is executable by the CPU 104 to produce game play, including character motion and character response; the characteristic generator 206 is executable by the CPU 104 to generate a character's expressions as displayed on a monitor (not shown); the data table adjuster 208 is executable by the CPU 104 to update data in data storage 202 during game play; and the voice recognition module 210 is executable by the CPU 104 to convert the electrical signals received via the controller interface 114 (FIG. 1) to game instructions. In addition, the CPU 104 accesses data in data storage 202 as instructed by the action generator 204, the characteristic generator 206, the data table adjuster 208, and the voice recognition module 210.

For the purposes of this exemplary embodiment, the game module 200 is a tribal simulation game in which a player creates and trains tribes of characters. A tribe of characters is preferably a group (or team) of characters associated with a given game user. Preferably, the tribal simulation game includes a plurality of character species, and each team of characters may include any combination of characters from any of the character species. A character reacts to internal stimuli and external stimuli based upon the character's genetic makeup as expressed by gene attributes. According to the present invention, internal stimuli are internal to the gaming environment, such as character/ character interactions, character/ group interactions, character/environment interactions, and character/game situation interactions. Typically, a user does not have direct control over internal stimuli. In contrast, a user has direct control over external stimuli. For example, the external stimuli which are external to the gaming environment, may be voice commands issued by a user, received by the controller interface 114, and directed to modify the behavior of a group of characters. Other forms of external stimuli are also contemplated by the present invention, such as keyboard or mouse initiated stimuli.

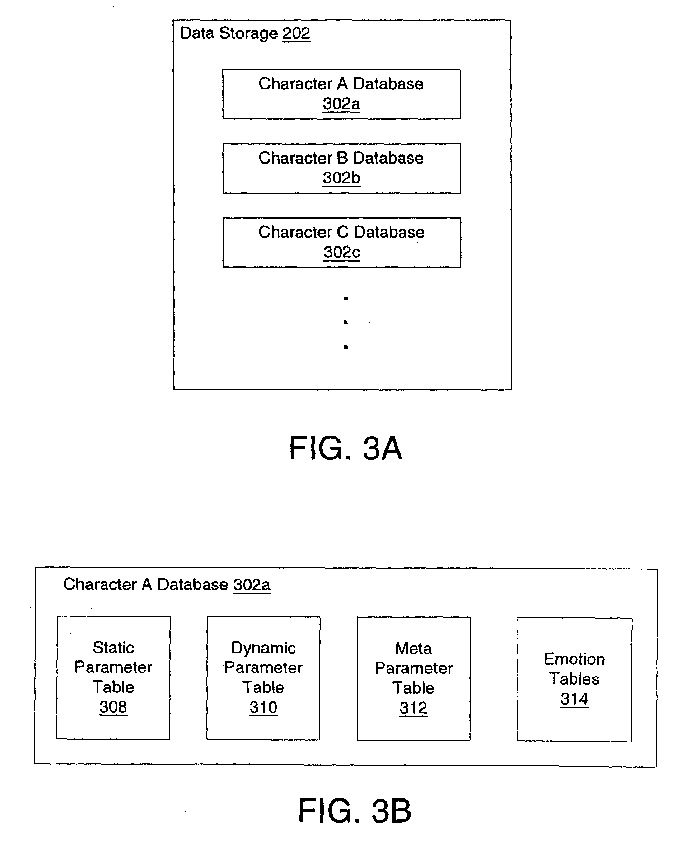

Typically, each character's behavior depends upon one or more gene attributes. Gene attributes that typically remain constant throughout a character's life are called static attributes; gene attributes that change during game play in response to internal and external stimuli are called dynamic attributes; and gene attributes that are functions of the static and/or dynamic attributes are called meta attributes. Those meta attributes that are based in part, or in whole, on the dynamic attributes are also dynamic in nature. In addition, a character's dynamic and meta attributes may be modified by emotional attributes as quantified by hate/ love (H/L) values. A character's emotional attributes are dynamic and change during game play in response to internal and external stimuli and correspond to other species, teams, and characters. A character's static attributes, dynamic attributes, meta attributes, and H/L values are described further below in conjunction with FIGS. 3-7.

FIG. 3A is a block diagram of an exemplary embodiment of data storage 202 of FIG. 2 according to the present invention. The data storage 202 includes a character A database 302a, a character B database 302b, and a character C database 302c. Although the FIG. 3A embodiment of data storage 202 shows three character databases 302a, 302b, and 302c, the scope of the present invention includes any number of character databases 302.

FIG. 3B is a block diagram of an exemplary embodiment of the character A database 302a of FIG. 3A. The character A database 302a includes a static parameter table 308, a dynamic parameter table 310, a meta parameter table 312, and emotion tables 314. Character A's static attributes are stored in the static parameter table 308; character A's dynamic attributes (preferably not including H/L values) are stored in the dynamic parameter table 310; character A's meta attributes are stored in the meta parameter table 312; and character A's H/L values are stored in the emotion tables 314. Herein, attributes are also referred to as parameters. Although the static attributes stored in the static parameter table 308 typically remain constant throughout character A's life, in an alternate embodiment of the invention, the static attributes may be changed through character training or user generated external stimuli. For example, a user may have a character train on a treadmill to increase the character's speed. Likewise, the user may have the character train with weights to increase the character's strength. Further, a user generated external stimuli may temporarily modify one or more static attributes. In one embodiment of the invention, a temporarily modified static attribute reverts back to its unmodified value after a time delay T, dependent upon the video game and the static attribute. Referring back to FIG. 3A, the character B database 302b and the character C database 302c are similar to the character A database 302a.

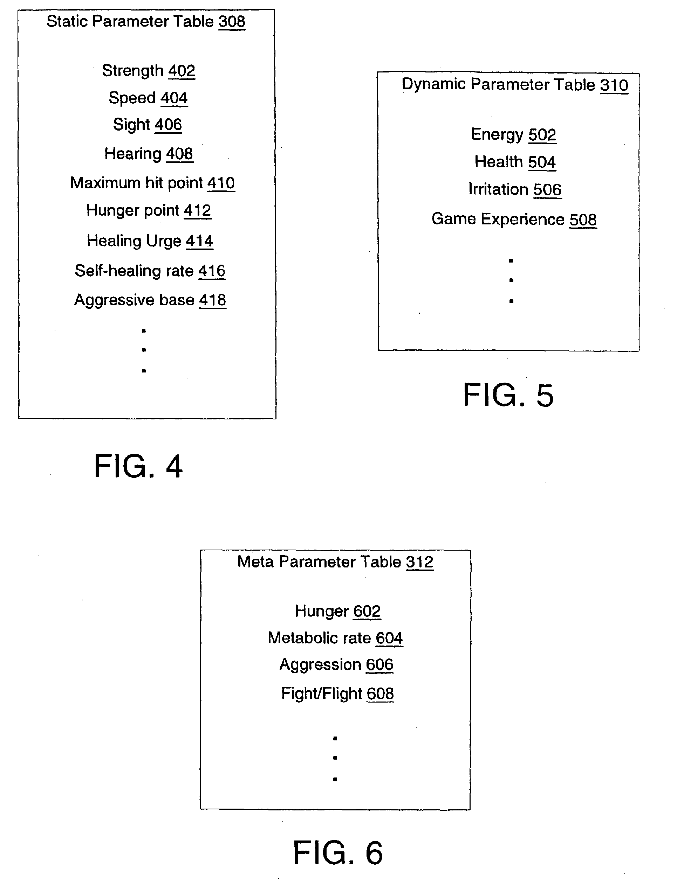

FIG. 4 is an illustration of an exemplary embodiment of the static parameter table 308 of FIG. 3B. The static parameter table 308 includes a plurality of static parameters, such as, but not entirely inclusive of or limited to, a strength parameter 402, a speed parameter 404, a sight parameter 406, a hearing parameter 408, a maximum hit point parameter 410, a hunger point parameter 412, a healing urge parameter 414, a self-healing rate parameter 416, and an aggressive base parameter 418. The scope of the invention may include other static parameters as well. Typically, the strength parameter 402 corresponds to a character's strength; the speed parameter 404 corresponds to how fast a character walks or runs across terrain; the sight parameter 406 corresponds to a character's viewing distance; and the hearing parameter 408 corresponds to a character's hearing distance. The maximum hit point parameter 410 is, preferably, a health parameter threshold value, which is discussed further below in conjunction with FIG. 5. The hunger point parameter 412 is a reference value to which a character's energy is measured to compute a character's hunger parameter, as will be described further below in conjunction with FIG. 6. Further, the healing urge parameter 414 corresponds to a character's desire to heal another character, while the self-healing rate parameter 416 corresponds to a time rate at which a character heals itself. Finally, the aggressive base parameter 418 is a reference value that represents a character's base aggression level, and is described further below in conjunction with FIG. 6. As previously indicated, not all of these parameters are required, and other parameters may be contemplated for use in the present invention.

FIG. 5 is an illustration of an exemplary embodiment of the dynamic parameter table 310 of FIG. 3B. The dynamic parameter table 310 includes a plurality of dynamic parameters, such as an energy parameter 502, a health parameter 504, an irritation parameter 506, and a game experience parameter 508. However, the scope of the present invention may not include all of the above listed parameters and/or include other dynamic parameters. These dynamic parameters change during game play. For example, the character's energy parameter 502 is a function of the character's consumption of food and the rate at which the character uses energy. When the character eats, the character's energy parameter 502 increases. However, the character is continuously using energy as defined by the character's metabolic rate. The metabolic rate is a meta parameter dependant upon several static parameters and is further discussed below in conjunction with FIG. 6.

In the present embodiment, the health parameter 504 is less than or equal to the maximum hit point parameter 410 (FIG. 4), and is a function of the character's energy parameter 502, the character's self-healing rate parameter 416 (FIG. 4), and a number of character hits. For example, a character is assigned a health parameter 504 equal to the maximum hit point parameter 410 upon game initialization. Each time the character is hit by another character via a physical blow or weapons fire, the character's health parameter 504 decreases. In addition, whenever a character's energy parameter 502 falls below a predefined threshold value, the character's health parameter 504 decreases. Furthermore, the character's health parameter 504 increases at the character's self-healing rate 416. Thus, although static and dynamic parameters are stored in separate tables, these parameters are closely related. For example, the health parameter 504 is based in part on the self-healing rate parameter 416, which is a static parameter.

Preferably, the character's irritation parameter 506 increases if the character is exposed to irritating stimuli, such as the presence of enemies or weapons fire within the character's range of sight, specified by the sight parameter 406 (FIG. 4). The irritation parameter 506 decreases over time at a predefined rate.

Finally, the character's game experience parameter 508 quantifies a character's game experiences, particularly in association with character participation in tribal games and fighting. For example, an experienced character has accumulated wisdom, and is less likely to be surprised by game situations and more adept at making game decisions.

FIG. 6 is an illustration of an exemplary embodiment of the meta parameter table 312 of FIG. 3B. The meta parameter table 312 includes a plurality of meta parameters, such as, but not necessarily completely inclusive of or limited to, a hunger parameter 602, a metabolic rate parameter 604, an aggression parameter 606, and a fight/flight parameter 608. The meta parameters are typically changeable, and are based upon the static and dynamic parameters. For example, a character's desire to eat is dependent upon the hunger parameter 602. In one embodiment of the invention, the hunger parameter 602 is a signed value defined by the energy parameter 502 (FIG. 5) less the hunger point parameter 412 (FIG. 4). If the character's hunger parameter 602 is greater than zero, then the character is not hungry. However, if the character's hunger parameter 602 is less than zero, then the character is hungry. As the negative hunger parameter 602 decreases (i.e., becomes more negative), the character's desire to eat increases. This desire to eat may then be balanced with other desires, such as a desire to attack an enemy or to search for a weapons cache. The weighting of these parameters may determine a character's behaviors and actions.

Typically, the metabolic rate parameter 604 is directly proportional to the character's speed parameter 404 (FIG. 4), the strength parameter 402 (FIG. 4), and the maximum hit point parameter 410 (FIG. 4), while indirectly proportional to the character's hunger point parameter 412 (FIG. 4) and healing urge parameter 414 (FIG. 4). For example, if the character's healing urge parameter 414 is large, the character is likely a calm, non-excitable individual. Therefore the character's metabolic rate parameter 604 would be small. Alternatively, if the character's healing urge parameter 414 is small, the character is likely a highly-strung, excitable individual. Consequently, the character's metabolic rate parameter 604 would be large.

Finally, the aggression parameter 606 is defined as the aggressive base parameter 418 (FIG. 4) plus the irritation parameter 506 (FIG. 5). As the aggression parameter 606 increases, the character becomes more aggressive and is more likely to be engaged in fights.

A character uses the fight/flight parameter 608 to determine whether, when faced with an enemy or other dangerous situations, to fight or flee the enemy. The fight/ flight parameter 608 is preferably based upon the hunger parameter 602, the aggression parameter 606, the game experience parameter 508 (FIG. 5), and the energy parameter 502 (FIG. 5). In one embodiment of the invention, a large value for the fight/flight parameter 608 corresponds to a character's desire to fight, whereas a small value for the fight/ flight parameter 608 corresponds to a character's desire to flee. For example, as the character's hunger or aggression increases, as measured by the character's hunger parameter 602 and aggression parameter 606, respectively, the character is more likely to engage in fights.

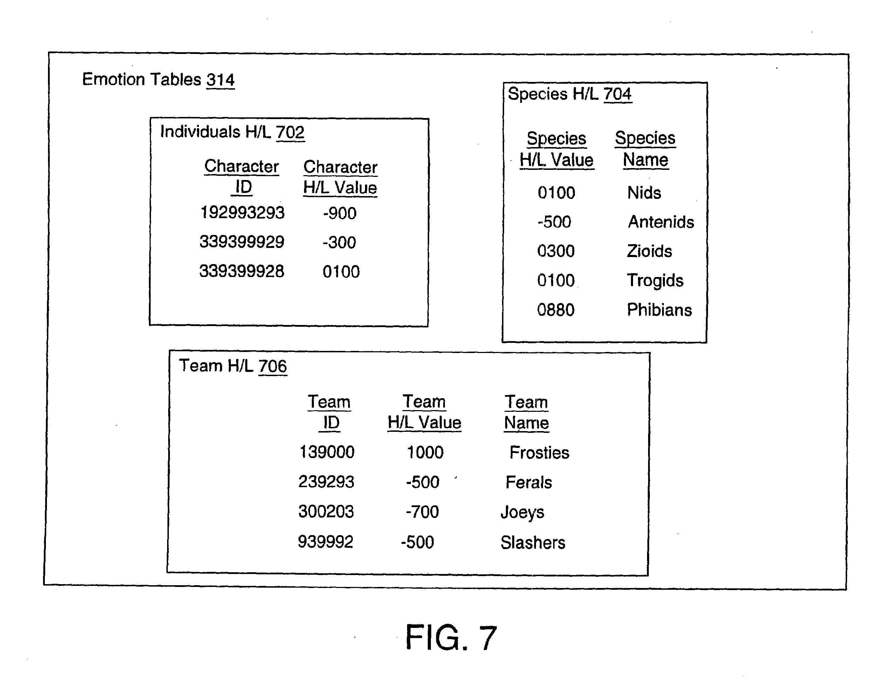

FIG. 7 is an illustration of one embodiment of the emotion tables 314 of FIG. 3B, according to the present invention. The emotion tables 314 include an individual's hate/love (H/L) table 702, a species H/L table 704, and a team H/L table 706. The individual's H/L table 702 includes one or more character identification (ID) numbers and one or more character H/L values, wherein each character ID number is associated with a character H/L value. For example, character A has a -900 character H/L value corresponding to a character identified by character ID number 192993293. Thus, character A has high hate for the individual having character ID number 192993293. Conversely, character A has a 100 character H/L value for character ID number 339399928. This positive H/L value corresponds to a general liking of the individual having ID number 339399928. The more negative or positive the H/L value is, the more the particular individual is hated or loved, respectively. In a further embodiment, the individuals H/L table 702 may also include individual character names corresponding to the character ID numbers.

The species H/L table 704 includes one or more species names and one or more species H/L values. Each species name is associated with a species H/L value which represents character A's relationship with each species. Similar to the individuals H/L table 702, the more negative or positive the H/L value, the more the particular species is hated or loved, respectively. For example, character A has a 100 species H/L value corresponding to the Nids species which implies a general like of the Nids species. Conversely, character A has a -500 species H/L value corresponding to the Antenids species. Therefore, character A has a strong dislike (i.e., hate) for the Antenids species.

Similarly, the team H/L table 706 includes one or more team ID numbers, one or more team H/L values, and one or more team names. Each team ID number is associated with a team H/L value and a team name. For example, the character A has a 1000 team H/L value corresponding to the Frosties team represented by ID number 139000. Because the H/L value is so high, character A has a deep love for the Frosties team. However, character A has a -500 H/L value corresponding to the Slashers team represented by ID number 939992, thereby representing a hate for this team.

In one embodiment of the invention, the character, species, and team H/L values range from -1000 to 1000. A character, species, or team H/L value of 1000 represents unconditional love directed towards the character, species, or team, respectively, while a character, species, or team H/L value of -1000 represents extreme hatred directed towards the character, species, or team, respectively. A H/L value of zero represents a neutral feeling. In alternate embodiments, the H/L value ranges may be larger or smaller, and may include other maximum and minimum values.

Any type of character interaction may cause changes to H/L values. For example, character A initially has a 800 character H/L value corresponding to character B and a -50 character H/L value corresponding to character C. However, character A sees character C hit character B, and thus character A's character H/L values are adjusted accordingly. In this example, character A's character H/L value corresponding to character B increases to 850 because of feelings of sympathy towards character B, and character A's character H/L value corresponding to character C may decrease to -200 due to an increased hatred for character C. In addition, if character C then attacks character A, character A develops more hatred towards character C, and character A's character H/L value corresponding to character C may further decrease to -275. However, at some later time in the game, if character C communicates to character A useful information on the operation of a weapon, then character A's character H/L value corresponding to character C may increase to -150.

According to one embodiment of the present invention, the data table adjuster 208 (FIG. 2) initializes all character and team H/L values to zero upon initiation of a new game. Furthermore, the data table adjuster 208 initializes all species H/L values to zero or to non-zero predefined values dependent upon game-defined species compatibility. In an alternate embodiment, the data table adjuster 208 initializes all species, character, and team H/L values to zero upon initiation of a new game. In a further embodiment, the data table adjuster 208 initializes some or all character, species, and team H/L values to non-zero predefined values dependent upon game-defined character, species, and team compatibility. Upon game completion, a user may save all the H/L values to the memory card 116 (FIG. 1) or the hard disc drive 128 (FIG. 1) for future game play. If the user has instructed the game module 200 (FIG. 2) to save the H/L values, the data table adjuster 208 may use the saved H/L values to initialize all game H/L values upon continuation of game play.

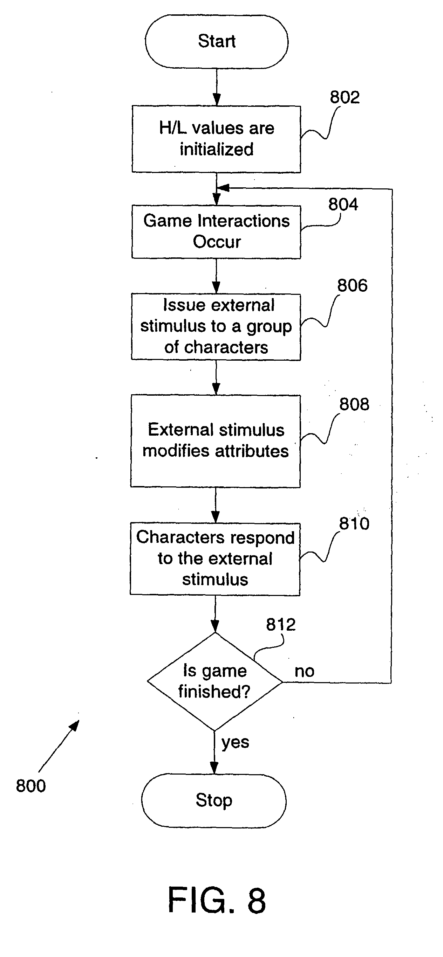

FIG. 8 is an exemplary flowchart 800 of method steps for dynamic behavioral modification based upon game interactions, according to one embodiment of the present invention. In step 802, H/L values are initialized. Initially, a user (not shown) instructs the game entertainment system 100 (FIG. 1) to execute the game module 200 (FIG. 2) via user commands and the controller interface 114 (FIG. 1). The CPU 104 (FIG. 1) receives the user commands and executes the data table adjuster 208 (FIG. 2). The data table adjuster 208 accesses the character, species, and team H/L values and stores the character, species, and team H/L values in the emotions table 314 (FIG. 3). These species H/L values are set to predefined values dependent upon game-defined species compatibility or results of a previous playing of the game. In an initial game play, since characters and teams have not yet interacted via game play, the data table adjuster 208, preferably, initializes all character and team H/L values to zero, where a H/L value of zero represents a neutral emotion.

Next in step 804, the CPU 104 executes the action generator 204 (FIG. 2) and the characteristic generator 206 (FIG. 2) to generate game play and game interactions. Game interactions typically include information exchange between characters, as well as communication, observation, detection of sound, direct physical contact, and indirect physical contact. For example, in one embodiment of the invention, character A and character B may interact and exchange information via a conversation. In another embodiment of the invention, character A may receive information via observations. For instance, character A may observe character B engaged in direct physical contact with character C via a fist fight, or character A may observe character B engage character C in indirect physical contact via an exchange of weapons fire. Alternatively, in another example, character A may observe character B interact with an "inanimate" object. For example, character B moves a rock and discovers a weapons cache. In a further embodiment of the invention, character A may hear a communication between character B and character C. In yet another embodiment of the invention, character A may engage in direct physical contact with character B. Finally, in another embodiment of the invention, character A may engage in indirect physical contact with character B. For example, character A may discharge a weapon aimed at character B, or character A may receive fire from character B's weapon. The above described game interactions are meant as exemplary interactions, however, the scope of the present invention covers all types of interactions.

Subsequently, the user issues an external stimulus to a group of characters in a step 806. For example, the user may issue a voice command via the controller interface 114 (FIG. 1), via a microphone (not shown) integrated with the controller interface 114, or via a microphone electrically connected to the I/O processor 110 (FIG. 1). Further, the user may issue a variety of voice commands, such as "run away," "fight," "search for weapons," "eat," "spread out," "group together," "follow character A," "hate species D," and "love species D." Depending on the design of the game, other commands may be issued by the user, and alternative forms of external stimuli may be utilized (e.g., keyboard or mouse commands).

In step 808, the external stimulus issued by the user modifies character attributes. More specifically, one or more of each character's static, dynamic, meta, and/or emotional attributes may be modified according to the issued stimulus. In one embodiment of the invention, the game entertainment system 100 uses the issued stimulus to temporarily modify a given attribute associated with each character of the group of characters by a predefined amount. After a predefined time delay T, dependent upon the video game and the given attribute, the given attribute reverts back to its pre-modified value.

In a first example, if the user issues the external stimulus, "run away," to a user-associated group of characters facing enemy characters via a voice command, the microphone (not shown) converts the voice command to electrical signals and sends the electrical signals to the CPU 104 via the I/O processor 110. The voice recognition module 210 (FIG. 2), executable by the CPU 104, processes the electrical signals and instructs the data table adjuster 208 to increment each character's fight/flight parameter 608 (FIG. 6) by a predefined "flee" amount.

For example, suppose the user-associated group of characters comprise character A with a fight/ flight parameter of 63, character B with a fight/ flight parameter of 86, and character C with a fight/ flight parameter of 35, where the fight/ flight parameter ranges from 0 (100% desire to flee) to 100 (100% desire to fight). In addition, if the predefined "flee" amount is -20, then the data table adjuster 208 decreases character A's fight/flight parameter to 43, character B's fight/flight parameter to 66, and character C's fight/flight parameter to 15. Subsequently, each character (A, B, and C) of the group of characters have more of a desire to "run away" from the enemy characters then before the external command was issued, although each character's individual desire to flee depends upon each character's modified fight/ flight parameter. Since each character's behavior depends upon each character's attributes, and since many of the attributes are interdependent, an external stimulus issued to a group of characters may have many behavioral manifestations.

In another embodiment of the present invention, after a predefined time delay T has elapsed from issuance of the external stimulus, the data table adjuster 208 changes the characters' fight/flight parameters to their pre-modified values. That is, the data table adjuster changes character A's fight/flight parameter back to 63, character B's fight/flight parameter to 86, and character C's fight/flight parameter to 35.

Although the present example illustrates a modification of the characters' fight/flight parameters upon issuance of the "run away" external stimulus, the modification of the fight/flight parameter is not inclusive, and the data table adjuster 208 may modify alternate character attributes to elicit the desired character response to the external stimulus.

In an alternate embodiment, the data table adjuster 208 adjusts each character's fight/ flight parameter by an amount dependent upon the strength of the voice command issued by the user. As the strength of the voice command increases, the adjustment increases. For example, a softly spoken "run away" command may decrease each character's fight/flight parameter by 10, whereas a loudly spoken "run away" command may decrease each character's fight/flight parameter by 35.

In a second example, the user issues an external stimulus, "fight," to a user-associated group of characters. Subsequently, in one embodiment of the invention, the data table adjuster 208 temporarily increases each character's fight/night parameter by a predefined "fight" amount. Referring to the first example, if the predefined "fight" amount is 10, then the data table adjuster 208 temporarily increases character A's fight/flight parameter to 73, character B's fight/flight parameter to 96, and character C's fight/flight parameter to 45. Subsequently, each character (A, B, and C) of the group of characters have more of a desire to "fight" the enemy characters than before the external command was issued.

In another embodiment of the invention, upon issuance of the "fight" command, the data table adjuster 208 adds a predefined aggression adjustment to each character's aggressive base parameter 418 (FIG. 4). Since the fight/flight parameter 608 is based in part on the aggression parameter 606 (FIG. 6), and since the aggression parameter 606 is related to the aggressive base parameter 418 and the irritation parameter 506 (FIG. 5), then as the aggressive base parameter 418 increases, the fight/flight parameter 608 increases and the character is more likely to be engaged in fights.

In a third example, the user issues an external stimulus, "eat," to a user-associated group of characters. Subsequently, in one embodiment of the invention, the data table adjuster 208 temporarily increases each character's hunger point parameter 412 (FIG. 4) by a predefined hunger point adjustment. Since each character's hunger parameter 602 (FIG. 6) decreases as each character's hunger point parameter 412 increases, each character has a greater desire to eat after the user issues the "eat" command. The scope of the present invention covers all character actions and behaviors modified by a user-issued external stimulus, such as the "eat" command. For example, as each character eats, each character's energy parameter 502 (FIG. 5) increases, and each character is more likely to be healthy as characterized by a large character health parameter 504 (FIG. 5). Consequently, each character will be more likely to fight enemy characters, since in one embodiment of the invention, each character's fight/flight parameter 608 (FIG. 6) increases as each character becomes more healthy.

In a fourth example, the user issues an external stimulus, "hate species D," to a user-associated group of characters. Subsequently, the data table adjuster 208 subtracts a predefined hate adjustment value from each character's species H/L value corresponding to species D. For example, character A has a 100 species H/L value (stored in the species H/L table 704 (FIG. 7)) corresponding to the Nids species. In addition, suppose character B has a -235 species H/L value corresponding to the Nids species, and character C has a -800 species H/L value corresponding to the Nids species. Furthermore, suppose that the predefined hate adjustment value is 100. After the user issues a "hate Nids" voice command, the data table adjuster 208 subtracts the predefined hate adjustment value from each character's species H/L value corresponding to the Nids species, resulting in character A having a 0 species H/L value corresponding to the Nids species, character B having a -335 species H/L value corresponding to the Nids species, and character C having a -900 species H/L value corresponding to the Nids species.

These above-described modifications to the character's species H/L values corresponding to the Nids species may affect the character's subsequent game actions, since the character's behavior depends upon the character's static, dynamic, meta, and emotional attributes. The above described external stimuli and adjustments to character attributes are meant as exemplary interactions, however, the scope of the present invention covers all types of external stimuli and all types of adjustments to a character's attributes.

In step 810, the user-associated group of characters responds to the user-issued external stimulus. Referring back to the first example of step 808, character A, character B, and character C run across the terrain in response to the "run away" voice command issued by the user. Alternatively, in the fourth example of step 808, character A, character B, and character C may not respond immediately to the "hate Nids" voice command issued by the user, however the adjustment to characters A, B, and C's species H/L values corresponding to the Nids species will influence their behavior upon an encounter with the Nids. In this example, if Nids characters are located near character A, B, or C, the character A, B, or C may attack the Nids characters should the character A, B, or C's H/L values modify other attributes of character A, B, or C, causing character A, B, or C to be more aggressive during a Nids encounter.

In another exemplary embodiment, if the external stimulus issued by the user in step 808 is "follow character A," then characters' flocking parameters (not shown) are adjusted such that the characters have a greater desire to follow character A. Of course not all characters may follow character A step by step, but dependent upon each character's adjusted flocking parameter, each of the characters will move in the same general direction as character A.

Next in step 812, the CPU 104 determines if the game user(s) have completed the game. If the CPU 104 determines that the game is completed, then the method ends. However if in step 812 the CPU 104 determines that the game is not completed, then the method continues at step 804. The scope of the invention includes method steps in which step 804 is optional. That is, a user may issue two or more external stimuli without an occurrence of any intervening game interaction.

The invention has been described above with reference to specific embodiments. It will, however, be evident that various modifications and changes may be made thereto without departing from the scope of the invention as set forth in the appended claims. The foregoing description and drawings are, accordingly, to be regarded in an illustrative rather than a restrictive sense.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method for behavioral modification of a group of characters using external stimuli, comprising the steps of:
receiving an external stimulus;
temporarily adjusting at least one attribute of each character from the group of characters based upon the external stimulus; and
responding to the external stimulus based upon the at least one attribute of each character.

2. The method of claim 1, wherein the external stimulus is a voice command.

3. The method of claim 1, wherein the at least one attribute of each character affects behavior of each character.

4. The method of claim 1, wherein at least one of the temporarily adjusted attributes reverts to a pre-adjusted value after a predefined time delay T.

5. The method of claim 1, wherein the at least one attribute includes hate/love (H/L) values.

6. The method of claim 1, wherein the at least one attribute includes static attributes.

7. The method of claim 1, wherein the at least one attribute includes dynamic attributes.

8. The method of claim 1, wherein the at least one attribute includes meta attributes.

9. An electronic-readable medium having embodied thereon a program, the program being executable by a machine to perform method steps for behavioral modification of a group of characters, the method steps comprising:
receiving an external stimulus;
temporarily adjusting at least one attribute of each character from the group of characters based upon the external stimulus; and
responding to the external stimulus based upon the at least one attribute of each character.

10. The electronic-readable medium of claim 9, wherein the external stimulus is a voice command.

11. The electronic-readable medium of claim 9, wherein the at least one attribute of each character affects behavior of each character.

12. The electronic-readable medium of claim 9, wherein at least one of the temporarily adjusted attributes reverts to a pre-adjusted value after a predefined time delay T.

13. A method for behavioral modification of a group of characters using external stimuli, comprising the steps of:
representing behavior of each character from the group of characters via attributes associated with each character from the group of characters;
receiving an external stimulus;
temporarily adjusting one or more attributes associated with each character based upon the external stimulus; and
having each character respond to the external stimulus based upon the one or more adjusted attributes.

14. The method of claim 13, wherein the external stimulus is a voice command.

15. The method of claim 13, wherein the step of adjusting one or more attributes further comprises the step of adjusting one or more emotional attributes associated with each character based upon the external stimulus.

16. The method of claim 15, wherein the one or more emotional attributes are hate/ love (H / L) values.

17. The method of claim 15, further comprising the step of having each character respond to the external stimulus based upon the one or more adjusted emotional attributes.

18. An electronic-readable medium having embodied thereon a program, the program being executable by a machine to perform method steps for behavioral modification of a group of characters using external stimuli, the method steps comprising:
representing behavior of each character from the group of characters via attributes associated with each character from the group of characters;
receiving an external stimulus;
temporarily adjusting one or more attributes associated with each character based upon the external stimulus; and
having each character respond to the external stimulus based upon the one or more adjusted attributes.

19. The electronic-readable medium of claim 18, wherein the step of adjusting one or more attributes further comprises the step of adjusting one or more emotional attributes associated with each character based upon the external stimulus.

20. The electronic-readable medium of claim 19, further comprising the step of having each character respond to the external stimulus based upon the one or more adjusted emotional attributes.

21. A system for behavioral modification of a group of characters, comprising:
means for receiving an external stimulus;
means for temporarily adjusting at least one attribute of each character from the group of characters based upon the external stimulus; and
means for responding to the external stimulus based upon the at least one attribute of each character.

22. An electronic system for behavioral modification of a group of characters, comprising:
a processor;
a input device coupled to the processor for receiving commands and converting the received commands into electrical signals;
a data storage coupled to the processor for storing attributes of each character from the group of characters; and
a data table adjuster executable by the processor for adjusting each character's attributes based upon the electrical signals.

23. The electronic system of claim 22, wherein the input device is a microphone and the commands are voice commands.

24. The electronic system of claim 22, wherein the commands are external stimuli.

25. The electronic system of claim 22, further comprising an action generator executable by the processor for processing the attributes in response to the commands.

26. The electronic system of claim 22, wherein the attributes include emotional attributes.

27. The electronic system of claim 22, wherein the attributes include static attributes.

28. The electronic system of claim 22, wherein the attributes include dynamic attributes.

29. The electronic system of claim 22, wherein the attributes include meta attributes.
